Europäisches Patentamt

European Patent Office

Office européen des brevets

(19)

(11) Publication number. **0 070 653**
A1

(12) # EUROPEAN PATENT APPLICATION

(21) Application number: 82303596.9

(51) Int. Cl.³: **G 10 H 1/26**, B 42 D 15/02

(22) Date of filing: 09.07.82

(30) Priority: 10.07.81 US 282157

(43) Date of publication of application: 26.01.83
Bulletin 83/4

(84) Designated Contracting States: **AT BE CH DE FR GB IT LI LU NL SE**

(71) Applicant: **COMMODORE ELECTRONICS LIMITED, P.O. Box N10256 Shirley and Victoria Street, Nassau (BS)**

(72) Inventor: **Marutani, Max Akira, 27762 Paseo Barano, San Juan Capistrano California 92675 (US)**
Inventor: **Black, Donald Lee, 25171 Via Elevado, Dana Point California 92629 (US)**
Inventor: **Shinasaki, Kenji, 6 Po Shan Road, Apt.1-B, Hong Kong (GB)**
Inventor: **Fujiyama, Atsutoshi, 5023 Patra Drive, San Jose California 95136 (US)**

(74) Representative: **Smith, Philip Antony et al, REDDIE & GROSE 16 Theobalds Road, London WC1X 8PL (GB)**

(54) **Musical tune generator.**

(57) A musical tune generator has a read only memory (34) which stores information corresponding to the notes of a preselected musical tune. An oscillator (22) drives an address circuit (26) which sequentially accesses the memory locations in the read only memory (34). A programmable frequency divider (24) is also coupled to the oscillator output, and is controlled by a portion of the read only memory output (36). Output from the programmable frequency divider corresponds to notes of the preselected tune and are reproduced in an audible mode. In a preferred embodiment, the tune generator is encapsulated within a greeting card (40) and is controlled by a switch (16) which enables the preselected tune to be played when the greeting card is opened.

-1-

# MUSICAL TUNE GENERATOR

The present invention relates generally to an electronic apparatus for reproducing a preselected musical tune, and more specifically to a device which programs a frequency divider with information stored in a read only memory and is made into an integral part of a greeting card.

A variety of electronic circuits which will store and replay a preselected musical tune have been designed. A conventional method for generating a preselected tune is to generate a plurality of signals of different frequencies, with each frequency corresponding to one note of the tune. A signal is selected from those available by suitable memory means which stores information corresponding to the notes of the tune. The selected signals are then coupled to an electromechanical transducer.

These conventional circuits are complicated and require a large amount of circuitry. Further, a substantial amount of power is required to drive the required amount of circuitry.

It is therefore an object of the present invention to provide an electronic tune generator which can reproduce a preselected tune which is stored in memory.

It is a further object of the present invention that the tune generator is comprised of a minimum amount of circuitry resulting in small size and light weight.

It is another object of the present invention to provide a musical tune generator which operates at a low power level.

Accordingly, one aspect of the present invention provides for a read only memory (ROM) which contains information corresponding to a preselected musical tune. This information is referably stored in the ROM at the time of fabrication. The output from the ROM controls two programmable frequency dividers. The output from an oscillator is also coupled to both programmable frequency dividers. The output of the second frequency divider is coupled to a counter, which in turn is coupled to the address inputs of the ROM. Each address position in the ROM stores the information for the frequency and duration of one note of the preselected tune. The duration information programs the second frequency divider which controls the duration of the note being played.

The first frequency divider is also controlled by the ROM, and has an output frequency corresponding to the notes of the preselected tune. The oscillator frequency is selected so that frequency division in a simple programmable frequency divider will provide output frequencies corresponding to musical tones. The selected frequency output is then amplified and transmitted to an electromechanical transducer.

It is yet another object of the present invention, at least in its preferred form, to provide for a musical tune generator of approximately paper stock thickness which can be mounted inside a greeting card. Accordingly, in one preferred form of the present invention, the oscillator, ROM, both programmable frequency dividers, counter and the amplifier are all constructed on a single integrated circuit chip. The electromechanical transducer is a miniature piezo-electric speaker, and the power is supplied by a hearing aid type battery, or other small power source.

The present invention may also provide a greeting card which will play a preselected tune upon opening of the greeting card. According to this aspect of a preferred embodiment, a miniature switch is provided which will activate the musical tune generator only when the greeting card is opened.

The novel features which characterize the present invention are defined by the appended claims. The foregoing and other objects and advantages of the present invention will hereinafter appear and for purposes of illustration, but not of limitation, a preferred embodiment is shown in the drawings wherein:

FIGURE 1 is a block diagram for an electronic musical tune generator; and

FIGURE 2 is a perspective view of a musical greeting card utilizing the musical tune generator of FIGURE 1.

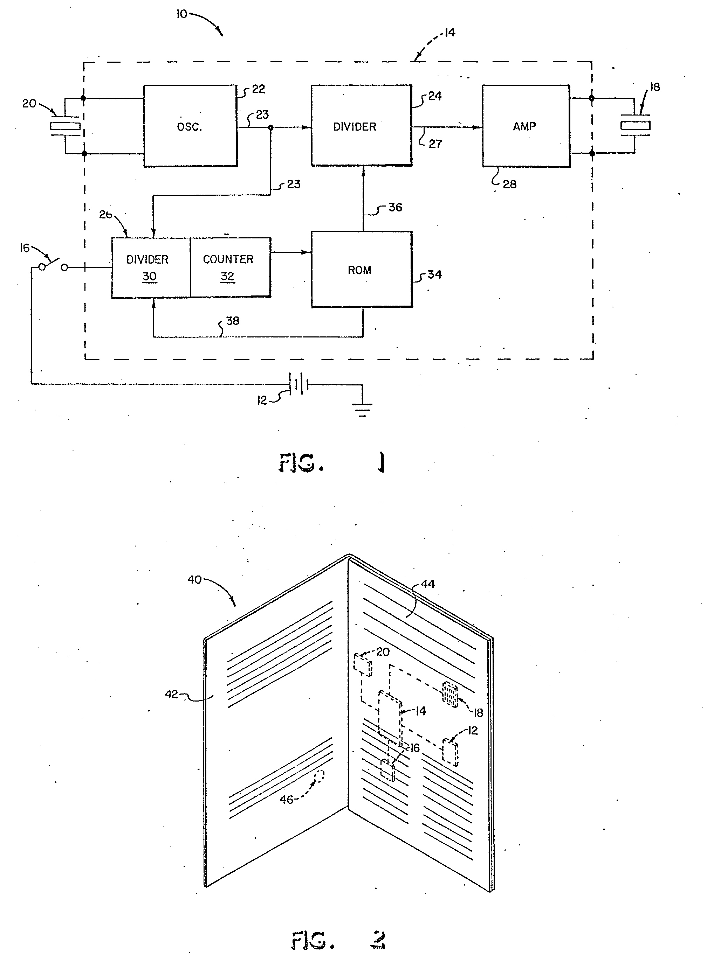

Referring to FIGURE 1, an electronic tune generator, designated generally by the reference numeral 10, has a battery 12 connected to a control circuit 14 through a switch 16. The output of the control circuit 14 drives a piezo-electric speaker 18. The control circuit 14 is a digital electronic circuit which is energized only when the switch 16 is closed.

A crystal 20 establishes the frequency of an oscillator 22. A conventional R-C circuit or other means may be used to set the oscillator 22, but the crystal 20 gives a more accurate and constant output frequency. The output signal 23 from the oscillator 22 is preferably a square wave, and is used both as a signal source to provide for an audio frequency output, and as a clocking signal for the control circuit 14. The output 23 from the oscillator 22 is coupled to a first programmable frequency divider 24 and an addressing circuit 26. The output 27 from the first programmable frequency divider 24 is connected to an audio frequency amplifier 28, which drives the speaker 18.

The addressing circuit 26 is comprised of a second programmable frequency divider 30 and a binary counter 32. The output from the binary counter 32 is coupled to the input of a read only memory (ROM) 34. Some of the outputs of the ROM 34 comprise a frequency control signal 36 which is coupled to the programming input of the first programmable frequency divider 24. The remainder of the output signal from the ROM 34 comprises a duration control signal 38 which is coupled to the frequency divider 30 of the addressing circuit 26.

In the preferred embodiment, the ROM 34 is an eight bit x N word ROM. The frequency control signal 36 is comprised of six bits of the ROM 34 output. The remaining two bits comprise the duration control signal 38. The number of bits in the output of the counter 32 must be large enough so that all words of the ROM 34 which contain information to be used are accessed. This condition is satisfied if the number of output bits from the counter 32 is given by the formula:

$$M > \log_2 I$$

when M is the number of counter output bits and I is the number of ROM words to be accessed. In the preferred embodiment, the ROM 34 is an eight bit x 256 word ROM, requiring the output from the counter 32 to have eight bits.

The operation of the electronic tune generator 10 is as follows:

The output frequency of the oscillator 22 is controlled by the resonant frequency of the crystal 20. The crystal 20 is a quartz crystal, which provides a highly accurate output frequency. The oscillator output 23 is coupled to the input of the first frequency divider 24. The output frequency of the first frequency divider 24 is a function of the input frequency. A change in the frequency control signal 36 causes a change in the output frequency of the first frequency divider 24. Since each frequency divider 24 output frequency corresponds to a different state in the control signal 36, there are $2^6$ possible states for the control signal 36. Sixteen of these states generate the "rests" or blanks, and therefore do not generate sound. This leaves 48 distinct output frequencies.

The output 27 from the first frequency divider 24 is coupled to the audio amplifier 28. This provides for amplification of the signal to a level which can be used by the speaker 18.

Each word of the ROM 34 stores the information for one note. The action of the counter 32 causes the information from consecutive words in the ROM 34 to update the frequency control signal 36 and duration control signal 38. The counter 32 increments and activates the next ROM word in the sequence when it receives a counting pulse from the second frequency divider 30. The second frequency divider 30 is programmable, and is controlled by the duration control signal 38. Different control signals on input 38 vary the duration between pulses which are conducted to the counter 32. This controls the duration before the next note stored in the ROM 34 is accessed, and thus provides for controllable duration of the different frequency outputs from the first frequency divider 24. The duration control signal 38 has two bits, which provides for a choice of four different durations for each accessed ROM word.

The frequency and duration information corresponding to each note in the desired tune has been previously stored in the ROM 34. In the preferred embodiment, this is done at the time of fabrication. The entire control circuit 14 is preferably fashioned on a single integrated circuit chip to reduce complexity, size, weight and power consumption. The ROM 34 information is preferably programmed at the time of fabrication.

When the switch 16 is closed, the control circuit 14 is activated. The ROM 34 is sequentially accessed, and notes of different duration and frequencies are amplified by the amplifier 28, and reproduced by the audio transducer 18.

Referring to FIGURE 2, preferred embodiment of a greeting card which plays a musical tune when opened is designated generally by the reference numeral 40. The card 40 has a cover leaf 42 hingably coupled to a base 44. A suitable sentiment or other card information is printed on the cover 42 and the base 44.

In the preferred embodiment, the base 44 is approximately five to seven millimeters in thickness. This allows the electronic tune generator 10 to be enclosed within the base 44. The control circuit 14 is preferably fabricated on a single chip, and the speaker 18, the switch 16, the crystal 20 and the battery 12 all have relatively thin dimensions suitable to be encased inside the base 44 without a noticeable bulge.

The switch 16 can be any switch which will close a circuit when the card is opened. In the preferred embodiment, the switch 16 is a light detecting semiconductor device. The switch 16 could also be a sensitive pressure actuated switch or a magnetic proximity switch in conjunction with magnetic material 46 embedded in the proper position on the cover 42.

A variety of greeting cards 40 may be programmed to play different preselected tunes for various occasions. The constuction of the tune generator 10 is identical in all cases, except for programming of the ROM 34, which is carried out at the time of fabrication.

Claims:

1. A musical greeting card (40), comprising:

a card base (44);

a cover leaf (42) movably coupled to the card base (44) characterized by

a self-contained, musical tune chip (14) enclosed within the card base, said chip including means (10) for generating an audible reproduction of a previously stored musical tune when said cover leaf is opened relative to the card base.

2. A card according to claim 1 characterized in that said generating means comprises:

an audio transducer (18);

integrated circuit means (14) coupled to said audio transducer (18) for supplying an electrical signal to said audio transducer corresponding to the preselected musical tune;

power means (12) for supplying energy to said integrated circuit means; and

a switch (16) which causes said integrated circuit means (14) to be energized when said card is opened.

3. A card according to claim 2 characterized in that said integrated circuit means (14) comprises:

an oscillator (22);

a programmable frequency divider (24) having a program input coupled to the output (23) of said oscillator (22);

an audio output amplifier (28) coupled to the output (27) of said frequency divider (24) and the input to said audio transducer (18);

a read only memory (34) coupled to the program input of said frequency divider (24); and,

an address circuit (26) coupled to the output (23) of said oscillator (18) and the output (36) of said read only memory (34), and also coupled to the input of said read only memory, wherein said address counter (26) ascendingly accesses the word locations in said read only memory (34).

4. A card according to claim 1, 2 or 3 characterized in that said power means (12) comprises a miniature DC battery.

5. A card according to claim 1, 2, 3 or 4 characterized in that said switch (16) comprises a light detecting semiconductor switch.

6. A card according to claims 1, 2, 3 or 4 characterized in that said switch (16) comprises a pressure actuated switching element.

7. A card according to claim 1, 2, 3 or 4 characterized in that said switch (16) comprises a magnetic proximity element.

8. A card according to any of the preceding claims characterized in that said audio transducer (18) comprises a piezo-electric speaker.

9. An electronic apparatus for reproducing a preselected musical tune, comprising an oscillator (22), an audio transducer (18) powered by an audio amplifier (28) and electronic circuitry connecting said oscillator (22) to said audio amplifier (28) characterized in that said electronic circuitry includes

a first programmable frequency divider (24) having a first input coupled to the output of said oscillator (22), and having a program input;

said audio amplifier (28) being coupled to the output (27) of said frequency divider (24);

a read only memory (34) having a first data output port (36) coupled to the program input of said frequency divider (24) and having a second data output port (38); and,

an address circuit (26) coupled to the output (23) of said oscillator, and also coupled to the second data output port (38) of said read only memory (34), said address circuit (26) having a data output port coupled to the input of said read only memory (34).

10. Apparatus according to claim 9 characterized in that said address circuit (26) comprises:

a second programmable frequency divider (30) coupled to said oscillator output (23) and the second data output port (38) of said read only memory (34); and,

a counter (32) coupled to the output of said second frequency divider (30), and having an output coupled to the input of said read only memory (34).

FIG. 1

FIG. 2

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | US-A-3 798 806 (D. SANFORD) <br> * Abstract; column 3, lines 43-68; figures 1,2 * | 1,2 | G 10 H 1/26 <br> B 42 D 15/02 |
| Y | GB-A-2 026 223 (K.K. SUWA SEIKOSHA) <br> * Page 1, lines 115-130; page 2, lines 1-12; figure 1 * | 1-3,8-10 | |
| E | EP-A-0 034 024 (S. SWARZTRAUBER et al.) <br> * Page 3, lines 25-34; page 4, lines 1-24; page 6, lines 16-34; pages 7,8; page 18, lines 1-5; claims 1-8; figures 1-3,5,6 * | 1-5,8,9 | |
| A | US-A-4 102 067 (F.A. TARRANT) <br> * Column 1, lines 19-34; figures 1,2 * | 1 | TECHNICAL FIELDS SEARCHED (Int. Cl. 3) |
| A | FR-A-2 373 844 (D. BOLUS et al.) <br> * Page 2, lines 6-40; page 3; page 4, lines 1-6; figures 1,4 * | 3,9 | G 10 H <br> B 42 D <br> G 09 F |

The present search report has been drawn up for all claims

| Place of search | Date of completion of the search | Examiner |
|---|---|---|
| THE HAGUE | 15-10-1982 | PULLUARD R.J.P.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82